# FASCICULE DE BREVET EUROPEEN

(11) **EP 2 949 016 B1**
(45) Date de publication et mention de la délivrance du brevet: **16.11.2016**
(21) Numéro de dépôt: 14700912.0
(22) Date de dépôt: 20.01.2014
(51) Int. Cl.: H02B 13/065, H01H 33/56, H02B 13/035, G01M 3/32

(54) **DETERMINATION D'UN TAUX DE FUITE D'UN GAZ D'ISOLATION**
BESTIMMUNG EINER LECKRATE EINES ISOLIERUNGSGAS
DETERMINATION OF LEAKAGE RATE OF AN INSULATING GAS

(30) Priorité: 22.01.2013 FR 1350556
(43) Date de publication de la demande: 02.12.2015
(73) Titulaire: General Electric Technology GmbH, 5400 Baden (CH)
(72) Inventeur: AIT ABDELMALEK, Farid, F-73100 Aix Les Bains (FR); RAYON, Jean-Luc, F-69250 Montanay (FR); WEIDMANN, Wilfrid, F-73410 La Biolle (FR)
(74) Mandataire: Brevalex
(86) Numéro de dépôt international: PCT/EP2014/051010
(87) Numéro de publication internationale: WO 2014/114587

(56) Documents cités:
- WO-A2-2011/134566
- JP-A- H07 129 870
- JP-A- 2006 311 756
- US-A1- 2007 027 640

## Description

### DOMAINE TECHNIQUE

La présente invention concerne la surveillance de matériel haute tension utilisant un gaz à haut potentiel diélectrique.

Plus particulièrement, la présente invention a trait à la détermination d'un taux de fuite d'un gaz d'isolation d'un compartiment à isolation gazeuse d'un système électrique.

Pour protéger l'environnement, les rejets de gaz d'isolation tel que l'hexafluorure de soufre SF6 doivent être contrôlés. En effet, l'hexafluorure de soufre SF₆ est l'un des gaz à effet de serre visés par le Protocole de Kyoto ainsi que dans la directive 2003/87/CE. Son potentiel de réchauffement global (PRG) est 22 800 fois supérieur à celui du dioxyde de carbone CO₂.

Le taux de fuite d'un gaz d'isolation dans une installation haute tension de type PSEMIG/LIG (Poste Sous Enveloppe Métallique à Isolation Gazeuse / Ligne à Isolation gazeuse) doit donc être surveillé.

### ÉTAT DE LA TECHNIQUE ANTÉRIEURE

Il est connu d'utiliser des densistats à contacts sur les PSEMIG. Ces dispositifs électromécaniques sont calibrés pour se déclencher à des valeurs de pression fixées par le fabricant du PSEMIG. Ils permettent de donner un état sur la tenue diélectrique du poste, mais en aucun cas ne permettent d'informer sur la quantité de gaz perdue ni sur le taux de fuite du gaz.

Des capteurs/transmetteurs analogiques de masse volumique de gaz, aussi appelés densimètres, peuvent être utilisés pour mesurer et transmettre une grandeur représentative de la masse volumique du gaz isolant enfermé dans un compartiment de PSEM mais ils sont sensibles aux perturbations électromagnétiques provoquées par l'environnement haute tension de l'installation.

Il est possible d'en déduire des courbes de tendance avec une précision de seulement quelques pourcents. Cette précision n'est pas suffisante pour la surveillance du taux de fuite du gaz d'isolation d'une installation de type PSEMIG/LIG.

Il est possible d'observer une fuite de gaz SF6 avec une caméra infrarouge. Cependant cela ne permet pas de quantifier la quantité de gaz perdue.

En considérant qu'un compartiment de gaz SF6 qui fuit doit être rempli à partir d'une bouteille de gaz SF6, il est encore possible de peser la bouteille avant et après chaque remplissage pour en déduire la quantité perdue depuis le remplissage précédent et donc le taux de fuite. Or plusieurs années peuvent séparer deux remplissages. Entre les deux, on n'a aucune information sur le taux de fuite du gaz.

Le document JP H07 129870A divulgue un procédé de détermination d'un taux de fuite d'un gaz d'isolation d'un compartiment à isolation gazeuse d'une installation électrique comportant plusieurs compartiments similaires comportant les étapes du préambule de la revendication 1.

Le document JP 2006 311756A décrit une méthode de détection d'un faible taux de fuite d'un gaz d'isolation d'un compartiment à isolation gazeuse d'une installation électrique comportant plusieurs compartiments similaires basée sur la mesure de la pression à intervalles réguliers dans chaque compartiment. Un processeur calcule en permanence la différence des valeurs de pression mesurées de chaque compartiment et déduit qu'une fuite existe dans un compartiment lorsque cette différence augmente.

### EXPOSÉ DE L'INVENTION

L'invention vise à résoudre les problèmes de la technique antérieure en fournissant un procédé de détermination d'un taux de fuite d'un gaz d'isolation d'un compartiment de PSEM à isolation gazeuse d'une installation électrique comportant plusieurs compartiments similaires, comportant les étapes de :
- Détermination périodique d'une valeur de masse volumique de gaz pour chacun des compartiments de l'installation,
- Détermination de droites de tendance respectives à partir de suites de valeurs de masse volumique de gaz précédemment déterminées pour chacun des compartiments de l'installation,
et caractérisé en ce qu'il
comporte les étapes de:
- Comparaison des pentes des droites de tendance déterminées entre elles,

- Détection d'une fuite si le résultat d'une comparaison pour l'une des pentes est supérieur à un seuil prédéterminé, et en cas de détection pour une pente,
- Détermination d'un taux de fuite pour le compartiment associé à la pente ayant conduit à une détection.

Grâce à l'invention, il est possible de déterminer le taux de fuite de gaz isolant, de manière à garantir qu'il reste inférieur à une valeur contractuelle et/ou d'alerter un opérateur en cas de fuite. Le taux de fuite est déterminé en fonction des pentes associées aux compartiments de l'installation.

Selon une caractéristique préférée, la détermination périodique d'une valeur de masse volumique de gaz pour chacun des compartiments de l'installation comporte la détermination d'une masse volumique instantanée du gaz présent dans chaque compartiment à partir de mesures de pression et température et le calcul d'une moyenne des masses volumiques instantanées considérées sur une période prédéterminée.

Ainsi les calculs sont faits sur une certaine durée qui est choisie en fonction de l'évolution des possibles fuites de gaz isolant et en fonction des variations de température ambiante et du profil de charge. Il s'agit en général de phénomènes relativement lents.

Selon une caractéristique préférée, les droites de tendance respectives sont déterminées sur une fenêtre glissante sur les suites de valeurs de masse volumique de gaz. Chaque nouvelle masse volumique de gaz déterminée pour un compartiment alimente la suite de valeur et ainsi provoque la réactualisation du calcul de la pente de la droite de tendance concernée.

Cela permet de suivre l'évolution des valeurs de masse volumique de gaz.

Selon une caractéristique préférée, la comparaison des pentes des droites de tendance est effectuée lorsqu'un changement de pente est détecté pour l'un des compartiments.

En effet, c'est lorsqu'il y a une dérive de pente d'une droite de tendance par rapport aux autres droites sur une fenêtre d'observation bornée qu'une fuite de gaz isolant est suspectée.

Le changement de pente d'une droite de tendance marque la fin d'une fenêtre d'observation sur laquelle les pentes liées à plusieurs compartiments similaires sont comparées et un taux de fuite est calculé.

Un changement de pente peut être provoqué par des phénomènes de variations d'ambiance thermique provoquant des mouvements de gaz dans son enveloppe ou par l'apparition d'une fuite dans un compartiment.

Selon une caractéristique préférée, la comparaison des pentes des droites de tendance comporte la comparaison de chacune des pentes avec la moyenne des autres pentes pour déterminer un écart pour chaque pente.

Ainsi, chaque droite de tendance enregistrée pour un compartiment est comparée aux autres droites de tendance des compartiments similaires, ce qui permet de détecter un éventuel comportement différent de l'un des compartiments.

Selon une caractéristique préférée, la détection d'une fuite comporte la sélection de l'écart le plus grand en valeur absolue et la comparaison de l'écart sélectionné avec le seuil prédéterminé.

L'écart qui est ainsi sélectionné correspond au compartiment pour lequel une fuite sera déclarée si l'écart est supérieur au seuil prédéterminé.

Selon une caractéristique préférée, la détermination du taux de fuite est effectuée à partir de l'écart le plus grand sélectionné.

L'invention concerne aussi un dispositif de détermination d'un taux de fuite d'un gaz d'isolation d'un compartiment à isolation gazeuse d'une installation électrique comportant plusieurs compartiments similaires, comportant:
- Des moyens de détermination périodique d'une valeur de masse volumique de gaz pour chacun des compartiments de l'installation,
- Des moyens de détermination de droites de tendance respectives à partir de suites de valeurs de masse volumique de gaz précédemment déterminées pour chacun des compartiments de l'installation, le dispositif étant caractérisé
   en ce qu'il comporte:
   - Des moyens de comparaison des pentes des droites de tendance déterminées entre elles,
- Des moyens de détection d'une fuite si le résultat d'une comparaison pour l'une des pentes est supérieur à un seuil prédéterminé, et en cas de détection pour une pente,
- Des moyens de détermination d'un taux de fuite pour le compartiment associé à la pente ayant conduit à une détection.

L'invention concerne encore une installation électrique comportant un dispositif tel que précédemment présenté.

Le dispositif et l'installation présentent des avantages analogues à ceux présentés ci-dessus.

Dans un mode particulier de réalisation, les étapes du procédé selon l'invention sont mises en oeuvre par des instructions de programme d'ordinateur.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions de programme d'ordinateur adaptées à la mise en oeuvre des étapes d'un procédé tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique, optique ou électromagnétique, qui peut être acheminé via un câble électrique ou optique, par radio, par guide d'ondes électromagnétiques ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

### BRÈVE DESCRIPTION DES DESSINS

D'autres caractéristiques et avantages apparaîtront à la lecture d'un mode de réalisation préféré donné à titre d'exemple non limitatif, décrit en référence aux figures dans lesquelles :
- La figure la représente de manière schématique une première installation électrique haute tension comportant des compartiments à isolation gazeuse, et équipée d'un dispositif de détermination d'un taux de fuite d'un gaz d'isolation d'un compartiment à isolation gazeuse selon un premier mode de réalisation de l'invention,
- La figure 1b représente de manière schématique une seconde installation électrique haute tension comportant des compartiments à isolation gazeuse, et équipée d'un dispositif de détermination d'un taux de fuite d'un gaz d'isolation d'un compartiment à isolation gazeuse selon un second mode de réalisation de l'invention,
- La figure 2 représente un procédé détermination d'un taux de fuite d'un gaz d'isolation d'un compartiment à isolation gazeuse selon l'invention,
- La figure 3 représente des sous-étapes du procédé de la figure 2,
- La figure 4 représente des droites de tendance déterminées selon l'invention.

### EXPOSÉ DÉTAILLÉ DE MODES DE RÉALISATION PARTICULIERS

Selon un premier mode de réalisation préféré représenté à la **figure la,** une installation électrique triphasée comporte des compartiments à isolation gazeuse C1, C2 et C3 correspondant chacun à une phase électrique de l'installation.

Les trois compartiments C1, C2 et C3 sont de constitution, de taille et de volume similaires. La longueur d'un compartiment peut être de quelques dizaines de centimètres jusqu'à plusieurs dizaines de mètres. Les compartiments sont traversés par un ou plusieurs conducteurs dans le(s)quel(s) un courant est susceptible de passer. Chaque compartiment comporte une enveloppe métallique remplie d'un gaz sous pression et ayant des propriétés diélectriques pour assurer l'isolation électrique du conducteur de l'enveloppe. Chaque compartiment a ses extrémités fermées par des barrières isolantes et étanches. Le gaz d'isolation est à titre d'exemple l'hexafluorure de soufre SF6.

Des capteurs de température CT1, CT2 et CT3 et des capteurs de pression CP1, CP2 et CP3 équipent respectivement chaque compartiment C1, C2 et C3, pour en mesurer la température et la pression du gaz isolant. Les capteurs de température et de pression sont distincts ou sont encapsulés au sein d'un transmetteur unique. Les capteurs disposent respectivement d'un microprocesseur et communiquent de manière numérique avec une unité UA d'acquisition elle-même reliée à une unité UT de traitement des données. L'unité d'acquisition peut être encapsulée dans le transmetteur ou distante. Chaque capteur de température et de pression a une sortie reliée à une entrée de l'unité UA d'acquisition, qui a une sortie reliée à une entrée de l'unité UT de traitement des données.

Il est à noter que l'invention peut être mise en oeuvre avec des transmetteurs de masse volumique, ou densistats.

L'unité UT de traitement des données pilote les mesures et l'exploitation qui en est faite, comme exposée dans la suite.

L'unité UT de traitement des données est reliée à une base de données BD qui mémorise toutes les données mesurées et calculées. L'unité UT de traitement des données est également reliée à une interface homme machine INT qui peut notamment informer un opérateur en cas de détection d'une fuite.

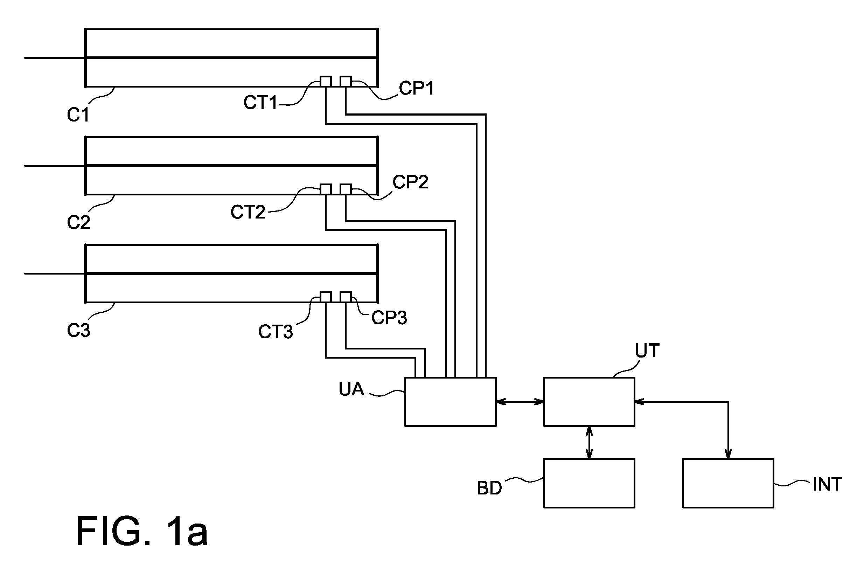

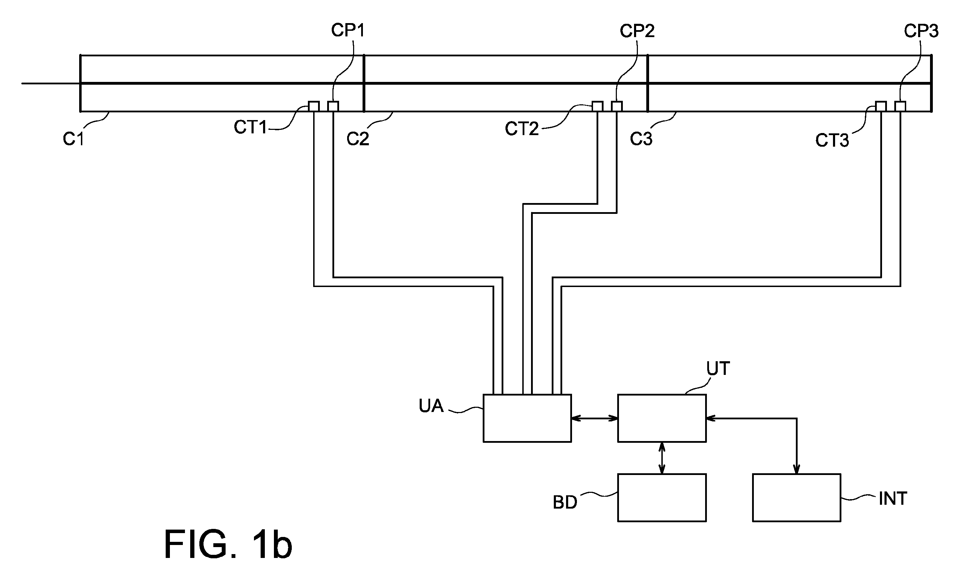

La **figure 1b** représente un second mode de réalisation d'installation électrique qui comporte des compartiments à isolation gazeuse. Il ne s'agit pas ici d'une installation triphasée, mais monophasée.

Cette installation comporte globalement les mêmes éléments que ceux du premier mode de réalisation. Par soucis de simplification, les mêmes références désignent des éléments similaires.

L'installation électrique monophasée comporte ainsi trois compartiments C1, C2 et C3 successivement traversés par un ou plusieurs conducteurs dans le(s)quel(s) un courant est susceptible de passer.

Il est à noter que le nombre de compartiments peut être différent.

Des capteurs de température CT1, CT2 et CT3 et des capteurs de pression CP1, CP2 et CP3 équipent respectivement chaque compartiment C1, C2 et C3, pour en mesurer la température et la pression du gaz isolant.

Chaque capteur de température et de pression a une sortie reliée à une entrée d'une unité UA d'acquisition, qui a une sortie reliée à une entrée d'une unité UT de traitement des données.

L'unité UT de traitement des données est reliée à une base de données BD. L'unité UT de traitement des données est également reliée à une interface homme machine INT.

Le fonctionnement de ces éléments et leurs interactions sont similaires dans les deux modes de réalisation. La suite de la description s'applique donc indifféremment aux deux modes de réalisations.

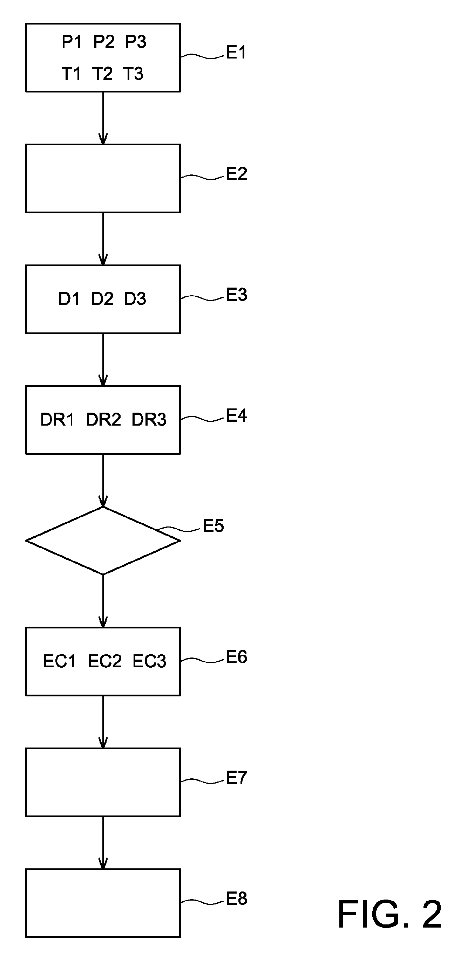

La **figure 2** représente le fonctionnement du dispositif selon l'invention, sous la forme d'un procédé comportant des étapes E1 à E8.

Selon l'invention, l'unité UT met principalement en oeuvre les étapes suivantes :
- Détermination périodique d'une valeur de masse volumique de gaz pour chacun des compartiments de l'installation,
- Détermination de droites de tendance respectives à partir de suites de valeurs de masse volumique de gaz précédemment déterminées pour chacun des compartiments de l'installation,

- Comparaison des pentes des droites de tendance déterminées entre elles,
- Détection d'une fuite si le résultat d'une comparaison pour l'une des pentes est supérieur à un seuil prédéterminé, et en cas de détection pour une pente,
- Détermination d'un taux de fuite pour le compartiment associé à la pente ayant conduit à une détection.

Plus précisément, l'étape E1 est une étape à laquelle sont mesurées les pressions de gaz P1, P2 et P3 et les températures T1, T2 et T3 respectivement dans chaque compartiment C1, C2 et C3. Les mesures sont effectuées périodiquement, suivant une période qui peut être configurable par l'utilisateur. Ces mesures sont typiquement effectuées plusieurs fois par seconde.

L'étape suivante E2 est un filtrage pour éliminer des mesures aberrantes et ne retenir que des valeurs cohérentes.

L'étape suivante E3 est la détermination de valeurs de masse volumique de gaz D1, D2 et D3 respectivement pour chacun des compartiments C1, C2 et C3 de l'installation.

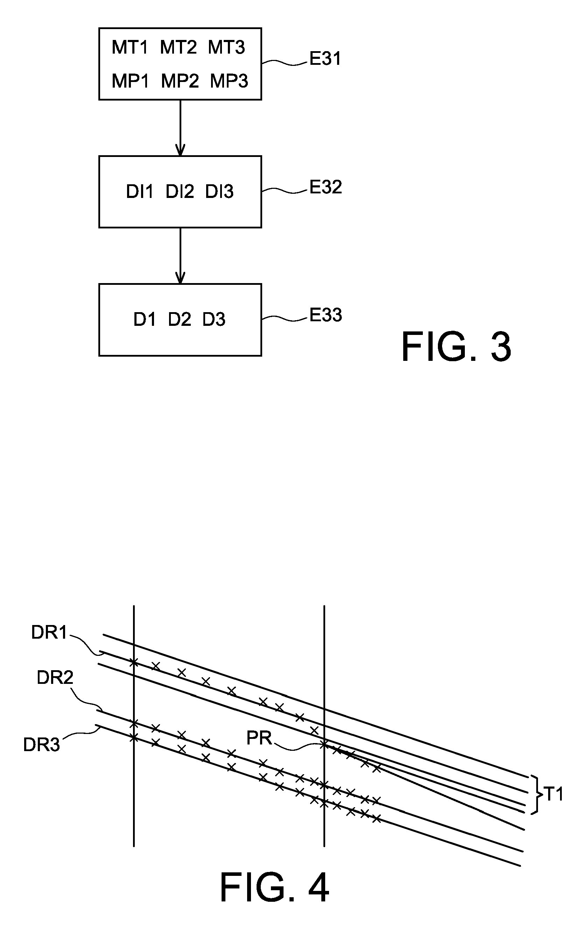

L'étape E3 comporte des sous-étapes E31 à E33 décrites en référence à la **figure 3****.**

A l'étape E31, une moyenne des pressions MP1 à MP3 et une moyenne des températures MT1 à MT3 sont calculées respectivement pour chaque compartiment C1 à C3. Les moyennes sont calculées sur un nombre prédéterminé de valeurs mesurées. Les moyennes des pressions sont calculées périodiquement, suivant une période qui peut être configurable par l'utilisateur.

A l'étape suivante E32, une masse volumique instantanée DI1 à DI3 du gaz présent dans chaque compartiment C1 à C3 est déterminée respectivement à partir des valeurs moyennes de pression et température précédemment calculées, en utilisant l'équation d'état des gaz réels de Beattie-Bridgeman. Ce calcul est effectué périodiquement, par exemple toutes les deux secondes.

L'étape suivante E33 est le calcul pour chaque compartiment C1 à C3 d'une moyenne des masses volumiques instantanées DI1 à DI3 considérées sur une période prédéterminée présentant la plus faible amplitude thermique ambiante et la plus faible amplitude de charge, c'est-à-dire la plus faible amplitude de courant transitant à travers les conducteurs.

La moyenne des masses volumiques instantanées pour chaque compartiment C1 à C3 est ainsi le résultat de l'étape E3 sous la forme d'une valeur de masse volumique de gaz D1 à D3. Cette masse volumique de gaz est mémorisée dans la base de données BD, qui contient ainsi une suite de valeurs de masse volumique de gaz journalières, pour chaque compartiment C1 à C3. Bien entendu, les valeurs mesurées et les résultats des calculs intermédiaires sont aussi mémorisés.

L'étape E3 est suivie de l'étape E4 qui est la détermination d'une droite de tendance, par régression linéaire sur les suites de valeurs de masse volumique de gaz D1 à D3 déterminées à l'étape E3, pour chacun des compartiments C1 à C3. Chaque compartiment est donc associé à une droite de tendance. La détermination d'une droite de tendance comporte la détermination de sa pente.

La **figure 4** représente trois droites de tendance DR1, DR2 et DR3, déterminées à partir de suites de masses volumiques de gaz D1, D2 et D3. Une droite de tendance donnée correspond à un compartiment donné.

Le calcul des droites de tendance est effectué sur une fenêtre glissante. La taille de la fenêtre est déterminée en fonction des variations de la température ambiante, du profil de charge, c'est-à-dire de l'amplitude de courant circulant dans l'installation, et de la détection d'une rupture de pente, comme expliqué dans la suite.

Par exemple, la fenêtre d'observation pour un PSEM situé dans un local équipé d'air conditionné sera plus courte que celle pour un PSEM situé en extérieur ou dans un local soumis à de fortes amplitudes thermiques.

Un tunnel d'incertitude est établi autour de chaque droite de tendance calculée, en appliquant la loi de Student avec un niveau de confiance donné. A titre d'exemple, un seul tunnel T1 est représenté autour de la droite DR1 dans la figure 4.

L'étape suivante E5 est un test pour déterminer s'il y a une rupture de pente pour l'une des droites de tendance. Une rupture est détectée lorsqu'il y a un changement de pente sur plusieurs valeurs, et que ces valeurs sortent du tunnel d'incertitude. Une telle rupture de pente est représentée à la figure 4 : sur la droite de tendance DR1, à partir du point de rupture PR, les valeurs de masse volumique déterminées pour le compartiment C1 sortent du tunnel T1.

Ce point de rupture PR borne la fenêtre d'observation en cours et en initie une nouvelle.

Lorsqu'il y a rupture de pente, l'étape E5 est suivie de l'étape E6 à laquelle les pentes des droites de tendance DR1, DR2 et DR3 de la fenêtre précédente sont comparées entre elles. Pour cela, chaque pente est comparée à la moyenne des deux autres, ce qui a pour résultat des écarts EC1, EC2 et EC3 respectivement pour chaque droite de tendance DR1, DR2 et DR3. L'écart le plus grand en valeur absolue est retenu.

A l'étape suivante E7, l'écart retenu est comparé à un seuil prédéterminé. Si l'écart retenu est supérieur au seuil prédéterminé, une fuite est déclarée, pour le compartiment pour lequel l'écart a été retenu.

L'étape suivante E8 est le calcul du taux de fuite du compartiment pour lequel une fuite a été déclarée à l'étape précédente. Le taux de fuite est calculé en fonction de l'écart retenu à l'étape E6 pour ce compartiment. Le volume des compartiments étant connu, il est possible de déterminer la quantité de gaz perdu. Le taux de fuite est la quantité de gaz perdue par unité de temps.

Pour déterminer un taux de fuite sur une période de temps légale ou contractuelle, il est possible de cumuler plusieurs fenêtres d'observation.

Si aucune fuite n'est détectée sur plusieurs fenêtres glissantes successives et closes, les fenêtres peuvent être juxtaposées pour effectuer un nouveau calcul de taux de fuite sur une période plus longue en calculant une pente moyenne sur les fenêtres juxtaposées.

Il est possible d'informer l'opérateur des différents évènements mesurés ou calculés par l'intermédiaire de l'interface homme-machine INT.

Le taux de fuite calculé peut être comparé aux obligations légales ou contractuelles qui déterminent un taux de fuite maximal, par exemple de 0.5% par an pour un poste complet.

## Revendications

1. Procédé de détermination d'un taux de fuite d'un gaz d'isolation d'un compartiment (C1, C2, C3) à isolation gazeuse d'une installation électrique comportant plusieurs compartiments similaires,
comportant les étapes de :
- Détermination périodique (E3) d'une valeur de masse volumique de gaz (D1, D2, D3) pour chacun des compartiments de l'installation,
- Détermination (E4) de droites de tendance respectives (DR1, DR2, DR3) à partir de suites de valeurs de masse volumique de gaz précédemment déterminées pour chacun des compartiments de l'installation,
et **caractérisé en ce qu'**il comporte les étapes de :
- Comparaison (E6) des pentes des droites déterminées entre elles,
- Détection (E7) d'une fuite si le résultat d'une comparaison pour l'une des pentes est supérieur à un seuil prédéterminé, et en cas de détection pour une pente,
- Détermination (E8) d'un taux de fuite pour le compartiment associé à la pente ayant conduit à une détection.

2. Procédé de détermination selon la revendication 1, **caractérisé en ce que** la détermination périodique (E3) d'une valeur de masse volumique de gaz pour chacun des compartiments de l'installation comporte la détermination (E32) d'une masse volumique instantanée (DI1, DI2, DI3) du gaz présent dans chaque compartiment à partir de mesures de pression et température et le calcul (E33) d'une moyenne des masses volumiques instantanées considérées sur une période prédéterminée.

3. Procédé de détermination selon la revendication 1 ou 2, **caractérisé en ce que** les droites de tendance respectives (DR1, DR2, DR3) sont déterminées sur une fenêtre glissante sur les suites de valeurs de masse volumique de gaz.

4. Procédé de détermination selon l'une quelconque des revendications 1 à 3, **caractérisé en ce que** la comparaison (E6) des pentes des droites de tendance est effectuée lorsqu'un changement de pente est détecté (E5) pour l'un des compartiments.

5. Procédé de détermination selon l'une quelconque des revendications 1 à 4, **caractérisé en ce que** la comparaison (E6) des pentes des droites de tendance comporte la comparaison de chacune des pentes avec la moyenne des autres pentes pour déterminer un écart pour chaque pente.

6. Procédé de détermination selon la revendication 5, **caractérisé en ce que** la détection d'une fuite comporte la sélection de l'écart le plus grand en valeur absolue et la comparaison de l'écart sélectionné avec le seuil prédéterminé.

7. Procédé de détermination selon la revendication 6, **caractérisé en ce que** la détermination du taux de fuite (E8) est effectuée à partir de l'écart le plus grand sélectionné.

8. Dispositif de détermination d'un taux de fuite d'un gaz d'isolation d'un compartiment (C1, C2, C3) à isolation gazeuse d'une installation électrique comportant plusieurs compartiments similaires,
Comportant :
- Des moyens de détermination périodique d'une valeur de masse volumique de gaz (D1, D2, D3) pour chacun des compartiments de l'installation,
- Des moyens de détermination de droites de tendance respectives (DR1, DR2, DR3) à partir de suites de valeurs de masse volumique de gaz précédemment déterminées pour chacun des compartiments de l'installation,
et **caractérisé en ce qu'**il comporte :
- Des moyens de comparaison des pentes des droites de tendance déterminées entre elles,
- Des moyens de détection d'une fuite si le résultat d'une comparaison pour l'une des pentes est supérieur à un seuil prédéterminé, et en cas de détection pour une pente,
- Des moyens de détermination d'un taux de fuite pour le compartiment associé à la pente ayant conduit à une détection.

9. Installation électrique **caractérisée en ce qu'**elle comporte un dispositif selon la revendication 8.

10. Installation électrique selon la revendication 9, **caractérisée en ce qu'**elle est multiphasée et **en ce que** chaque compartiment correspond à une phase de l'installation.

11. Programme d'ordinateur comportant des instructions pour l'exécution des étapes du procédé selon l'une quelconque des revendications 1 à 7 lorsque ledit programme est exécuté par un ordinateur.

12. Support d'enregistrement lisible par un ordinateur sur lequel est enregistré un programme d'ordinateur comprenant des instructions pour l'exécution des étapes du procédé selon l'une quelconque des revendications 1 à 7.

## Patentansprüche

1. Verfahren zur Bestimmung einer Leckrate eines Isolationsgases aus einer gasisolierten Kammer (C1, C2, C3) einer elektrischen Anlage, die mehrere ähnliche Kammern umfasst,
umfassend die folgenden Schritte:
- periodisches Bestimmen (E3) eines Gasdichtewerts (D1, D2, D3) für jede der Kammern der Anlage,
- Bestimmen (E4) von jeweiligen Tendenzgeraden (DR1, DR2, DR3) ausgehend von Folgen von Gasdichtewerten, die zuvor für jede der Kammern der Anlage bestimmt wurden,
und **dadurch gekennzeichnet, dass** es die folgenden Schritte umfasst:
- Vergleichen (E6) der Steigungen der bestimmten Geraden miteinander,
- Bestimmen (E7) eines Lecks, wenn das Ergebnis eines Vergleichs für eine der Steigungen größer als eine vorbestimmte Schwelle ist, und im Fall der Erfassung für eine Steigung,
- Bestimmen (E8) einer Leckrate für die Kammer, die der Steigung zugeordnet ist, die zu einer Erfassung geführt hat.

2. Verfahren zur Bestimmung nach Anspruch 1, **dadurch gekennzeichnet, dass** die periodische Bestimmung (E3) eines Gasdichtewerts für jede der Kammern der Anlage das Bestimmen (E32) einer instantanen Gasdichte (D11, D12, DI3) umfasst, die in jeder Kammer vorhanden ist, ausgehend von Messungen des Drucks und der Temperatur, sowie die Berechnung (E33) eines Mittelwerts der über einen vorbestimmten Zeitraum betrachteten instantanen Dichten.

3. Verfahren zur Bestimmung nach Anspruch 1 oder 2, **dadurch gekennzeichnet, dass** die jeweiligen Tendenzgeraden (DR1, DR2, DR3) über ein Fenster bestimmt werden, das über die Folgen von Gasdichtewerten gleitet.

4. Verfahren zur Bestimmung nach einem der Ansprüche 1 bis 3, **dadurch gekennzeichnet, dass** der Vergleich (E6) der Steigungen der Tendenzgeraden durchgeführt wird, wenn eine Steigungsveränderung für eine der Kammern erfasst wird (E5).

5. Verfahren zur Bestimmung nach einem der Ansprüche 1 bis 4, **dadurch gekennzeichnet, dass** der Vergleich (E6) der Steigungen der Tendenzgeraden das Vergleichen jeder der Steigungen mit dem Mittelwert der anderen Steigungen umfasst, um für jede Steigung einen Abstand zu bestimmen.

6. Verfahren zur Bestimmung nach Anspruch 5, **dadurch gekennzeichnet, dass** die Erfassung eines Lecks die Auswahl des im Absolutwert größten Abstands umfasst sowie den Vergleich des ausgewählten Abstands mit der vorbestimmten Schwelle.

7. Verfahren zur Bestimmung nach Anspruch 6, **dadurch gekennzeichnet, dass** die Bestimmung der Leckrate (E8) ausgehend von dem ausgewählten größten Abstand durchgeführt wird.

8. Vorrichtung zur Bestimmung einer Leckrate eines Isolationsgases aus einer gasisolierten Kammer (C1, C2, C3) einer elektrischen Anlage, die mehrere ähnliche Kammern umfasst,
umfassend:
- Mittel zum periodischen Bestimmen eines Gasdichtewerts (D1, D2, D3) für jede der Kammern der Anlage,
- Mittel zum Bestimmen von jeweiligen Tendenzgeraden (DR1, DR2, DR3) ausgehend von Folgen von Gasdichtewerten, die zuvor für jede der Kammern der Anlage bestimmt wurden,
und **dadurch gekennzeichnet, dass** sie umfasst:
- Mittel zum Vergleichen der Steigungen der bestimmten Tendenzgeraden miteinander,
- Mittel zum Erfassen eines Lecks, wenn das Ergebnis eines Vergleichs für eine der Steigungen größer als eine vorbestimmte Schwelle ist, und im Fall der Erfassung für eine Steigung,
- Mittel zum Bestimmen einer Leckrate für die Kammer, die der Steigung zugeordnet ist, die zu einer Erfassung geführt hat.

9. Elektrische Anlage, **dadurch gekennzeichnet, dass** sie eine Vorrichtung nach Anspruch 8 umfasst.

10. Elektrische Anlage nach Anspruch 9, **dadurch gekennzeichnet, dass** sie mehrphasig ist, und dass jede Kammer einer Phase der Anlage entspricht.

11. Computerprogramm, das Anweisungen für die Ausführung der Schritte des Verfahrens nach einem der Ansprüche 1 bis 7 enthält, wenn das Programm durch einen Computer ausgeführt wird.

12. Computerlesbares Speichermittel, auf dem ein Computerprogramm gespeichert ist, das Anweisungen zum Ausführen der Schritte des Verfahrens nach einem der Ansprüche 1 bis 7 umfasst.

## Claims

1. A method of determining a leak rate of an insulating gas from a gas-insulated compartment (C1, C2, C3) of an electrical installation having a plurality of similar compartments;
the method comprising the steps of:
· periodically determining (E3) a gas density value (D1, D2, D3) for each of the compartments of the installation;
· determining (E4) respective trend lines (DR1, DR2, DR3) from series of gas density values that have previously been determined for each of the compartments of the installation;
and **characterized in that** in comprises the steps of:
· comparing (E6) slopes of the determined trend lines with one another;
· detecting (E7) a leak if the result of a comparison for one of the slopes is greater than a predetermined threshold; and in the event of a leak being detected for a slope
· determining (E8) a leak rate for the compartment associated with the slope that lead to a leak being detected.

2. A determination method according to claim 1, **characterized in that** the periodical determination (E3) of a gas density value for each of the compartments of the installation comprises determining (E32) an instantaneous density (DI1, DI2, DI3) of the gas present in each compartment from the pressure and temperature measurements and the calculation (E33) of a mean of the instantaneous densities considered over a predetermined period.

3. A determination method according to claim 1 or 2, **characterized in that** the respective trend lines (DR1, DR2, DR3) are determined in a moving window over the series of gas density values.

4. A determination method according to anyone of claims 1 to 3, **characterized in that** the slopes of the trend lines are compared (E6) when a change in slope is detected (E5) for one of the compartments.

5. A determination method according to anyone of claims 1 to 4, **characterized in that** the comparison (E6) of the slopes of the trend lines comprises comparing each of the slopes with the mean of the other slopes in order to determine an offset for each slope.

6. A determination method according to claim 5, **characterized in that** detection of a leak comprises selecting the largest offset in absolute value and comparing the selected offset with the predetermined threshold.

7. A determination method according to claim 6, **characterized in that** the leak rate (E8) is determined from the largest selected offset.

8. A device for determining a leak rate of an insulating gas from a gas-insulated compartment (C1, C2, C3) of an electrical installation having a plurality of similar compartments;
the device comprising:
· means for periodically determining a gas density value (D1, D2, D3) for each of the compartments of the installation;
· means for determining respective trend lines (DR1, DR2, DR3) from series of gas density values that have previously been determined for each of the compartments of the installation;
and **characterized in that** in comprises:
· means for comparing slopes of the determined trend lines with one another;
· means for detecting a leak if the result of a comparison for one of the slopes is greater than a predetermined threshold; and in the event of a leak being detected for a slope
· means for determining a leak rate for the compartment associated with the slope that lead to a leak being detected.

9. An electrical installation **characterized in that** it includes a device according to claim 8.

10. An electrical installation according to claim 9, **characterized in that** it is multi-phased and **in that** each compartment corresponds to a phase of the installation.

11. A computer program comprising instructions for executing steps of the method according to anyone of claims 1 to 7 when said program is executed by a computer.

12. A recording medium that is readable by a computer on which is recorded a computer program comprising instructions for executing the steps of the method according to any one of claims 1 to 7.
